# EUROPÄISCHE PATENTSCHRIFT

(11) **EP 3 569 465 B1**
(45) Veröffentlichungstag und Bekanntmachung des Hinweises auf die Patenterteilung: **03.07.2024**
(21) Anmeldenummer: 19170733.0
(22) Anmeldetag: 24.04.2019
(51) Int. Cl.: B60W 50/14, B60W 50/08, B60W 30/12

(54) **VERFAHREN UND SYSTEM ZUR BEREITSTELLUNG EINER AUTOMATISIERUNGSFUNKTION FÜR EIN FAHRZEUG**
SYSTEM AND METHOD FOR PROVIDING AN AUTOMATION FUNCTION FOR A VEHICLE
DISPOSITIF ET SYSTÈME DE FOURNITURE D'UNE FONCTION D'AUTOMATISATION POUR UN VÉHICULE

(30) Priorität: 18.05.2018 DE 102018207869
(43) Veröffentlichungstag der Anmeldung: 20.11.2019
(73) Patentinhaber: VOLKSWAGEN AKTIENGESELLSCHAFT, 38440 Wolfsburg (DE)
(72) Erfinder: Stele, Andreas, 38440 Wolfsburg (DE); Aminev, Timur, 38122 Braunschweig (DE); Eigel, Thomas, 13585 Berlin (DE); Detering, Stefan, 38110 Braunschweig (DE)

(56) Entgegenhaltungen:
- DE-A1-102004 059 999
- DE-A1-102014 019 192
- DE-A1-102015 206 969
- DE-A1-102017 100 763
- US-A1- 2017 212 633
- US-A1- 2017 291 615

## Beschreibung

Die vorliegende Erfindung betrifft ein Verfahren und ein System zur Bereitstellung einer Automatisierungsfunktion für ein Fahrzeug.

In modernen Fahrzeugen werden typischerweise Fahrerassistenzsysteme mit einer Vielzahl von Automatisierungsfunktionen angeboten. Unter einem Fahrerassistenzsystem wird eine Einrichtung eines Fahrzeugs verstanden, welche den Fahrer beim Fahren des Fahrzeugs unterstützt. Fahrerassistenzsysteme im Sinne der Erfindung unterstützen den Fahrer insbesondere auch durch Automatisierungsfunktionen, durch welche die Fortbewegung des Fahrzeugs beeinflusst wird. Auf diese Weise können unterschiedliche Parameter der Fortbewegung des Fahrzeugs geregelt werden und es können automatische Eingriffe vorgenommen werden.

Ohne Fahrerassistenzsysteme beeinflusst der Fahrer direkt die Bewegung des Fahrzeugs. Es werden allenfalls Signale oder Bewegungen von durch den Fahrer betätigten Bedienelementen, wie der Pedalerie, dem Schaltknüppel oder dem Lenkrad, an entsprechende Einrichtungen des Fahrzeugs übertragen, welche die Fortbewegung des Fahrzeugs beeinflussen. Eine derartige Fortbewegung des Fahrzeugs entspricht dem geringsten Grad der Automatisierung. Bei einem höheren Grad der Automatisierung wird zum Teil automatisch in Einrichtungen eingegriffen, welche der Fortbewegung des Fahrzeugs dienen. Beispielsweise wird in die Lenkung des Fahrzeugs oder die Beschleunigung in positiver oder negativer Richtung eingegriffen.

Bei einem noch höheren Grad der Automatisierung wird soweit in Einrichtungen des Fahrzeugs eingegriffen, dass bestimmte Fortbewegungsarten des Fahrzeugs, zum Beispiel eine Geradeausfahrt, automatisch ausgeführt werden können. Beim höchsten Grad der Automatisierung können Routen eines Navigationssystems im Wesentlichen automatisch gefahren werden. Dabei wird jedoch typischerweise sichergestellt, dass der Fahrer auch bei einem hohen Automatisierungsgrad die Kontrolle über die Fahrzeugführung durch aktives Lenken oder Betätigen der Pedalerie sofort wieder zurückgewinnen kann.

Des Weiteren können Fahrerassistenzsysteme verschiedene Sicherheitsfunktionen erfüllen. Bei einem besonders geringen Grad der Automatisierung können dem Fahrer etwa Informationen ausgegeben werden, die ihn in der Art und Weise, wie er das Fahrzeug fortbewegt, beeinflussen. Zudem können durch Sicherheitsfunktionen Warnungen ausgegeben werden, die eine unmittelbare Reaktion des Fahrers erfordern. Bei diesem Grad der Sicherheitsfunktionen greifen die Fahrerassistenzmodule jedoch nicht aktiv und automatisch in die Funktion der Einrichtungen ein, welche die Fortbewegung des Fahrzeugs beeinflussen.

Bei einem höheren Grad der Sicherheitsfunktionen wird zum Teil automatisch in Einrichtungen eingegriffen, welche der Fortbewegung des Fahrzeugs dienen. Beispielsweise wird in die Lenkung des Fahrzeugs oder die Beschleunigung in positiver oder negativer Richtung insbesondere präventiv eingegriffen. Bei einem noch höheren Grad der Sicherheitsfunktionen wird soweit in Einrichtungen des Fahrzeugs eingegriffen, welche die Fortbewegung des Fahrzeugs beeinflussen, dass bestimmte Manöver des Fahrzeugs automatisch ausgeführt werden können, wie beispielsweise eine Vollbremsung oder ein gezieltes Ausweichmanöver, um ein Verlassen der Fahrbahn oder eine Kollision zu vermeiden.

Durch Fahrerassistenzsysteme kann der Fahrer also auf bestimmte Gefahren aufmerksam gemacht werden, wodurch die Sicherheit beim Führen des Fahrzeugs erhöht wird. Bei einem aktiven Eingriff eines Fahrerassistenzmoduls in die Fortbewegung des Fahrzeugs können auch dann gefährliche Fahrsituationen, wie Kollisionen oder unkontrollierte Bewegungen des Fahrzeugs, vermieden werden, wenn der Fahrer nicht direkt in das Fahrgeschehen eingreift. Bei den Sicherheitsfunktionen des Fahrerassistenzsystems behält jedoch der Fahrer insbesondere stets die volle Kontrolle und Verantwortung über die Fahrsituation.

Die DE 10 2012 009 005 A1 beschreibt ein Verfahren zur Nutzung von Gütemaßen für verkehrsrelevante Informationen. Die verkehrsrelevanten Informationen werden von verschiedenen Informationsquellen empfangen, ihnen wird ein Gütemaß zugeordnet und sie werden in einem Navigationssystem oder Fahrerassistenzsystem verwendet. Dabei wird das Gütemaß der verwendeten verkehrsrelevanten Informationen angezeigt.

In der DE 10 2012 101 686 A1 wird ein Verfahren für ein Fahrerassistenzsystem zur autonomen Läng- und Querregelung vorgeschlagen. Die Unterstützung des Fahrers kann in unterschiedlichem Maße erfolgen und hängt von verschiedenen Bedingungen ab. Kann eine Regelungsaufgabe nicht zuverlässig übernommen werden, so wird der Fahrer hierüber informiert.

Die DE 10 2004 059999 A1, die DE 10 2017 100 763 A1 und die US 2017/291615 A1 beschreiben Verfahren zur Bereitstellung von Automatisierungsfunktionen für ein Fahrzeug, bei denen Umfelddaten anhand von Sensoren des Fahrzeugs erfasst werden. Ferner wird die Qualität der erfassten Umfelddaten bewertet und in Abhängigkeit von dieser Bewertung eine Ausgabe erzeugt.

Die DE 10 2015 206 969 A1 beschreibt ein Fahrerassistenzsystem, das aktive Querführungseingriffe durch automatische Lenkeingriffe durchführt. Es umfasst zwei Teilfunktionen, durch die sich unterschiedliche querführungsbezogene Zustände des Systems ergeben, für das ein Anzeigekonzept mit unterschiedlichen Anzeigen auf einem einzigen definierten Anzeigenbereich für jeden möglichen Zustand vorgesehen ist.

Die DE 10 2014 019 192 A1 beschreibt die Darstellung eines online-Status einer hybriden Sprachbedienung.

Die US 2017/0212633 A1 beschreibt ein Steuersystem für ein Fahrzeug, bei dem ein Datenquellensymbol in Form einer Wolke für die datentechnische Verbindung angezeigt wird.

Der vorliegenden Erfindung liegt die Aufgabe zugrunde, ein Verfahren und ein System zur Bereitstellung einer Automatisierungsfunktion für ein Fahrzeug bereitzustellen, bei denen der Fahrer schnell und einfach erfassen kann, inwieweit Automatisierungsfunktionen in die Steuerung des Fahrzeugs eingreifen.

Erfindungsgemäß wird diese Aufgabe durch ein Verfahren mit den Merkmalen des Anspruchs 1 und ein System mit den Merkmalen des Anspruchs 8 gelöst. Vorteilhafte Ausgestaltungen und Weiterbildungen ergeben sich aus den abhängigen Ansprüchen.

Bei dem erfindungsgemäßen Verfahren der eingangs genannten Art werden Umfelddaten erfasst. In Abhängigkeit von den erfassten Umfelddaten wird die Automatisierungsfunktion aktiviert und ein Qualitätsmaß bestimmt.. Es wird eine grafische Ausgabe erzeugt und ausgegeben, wobei die Ausgabe ein Qualitätsanzeigeelement umfasst, das in Abhängigkeit von dem Qualitätsmaß gebildet wird.

Der Fahrer kann dadurch vorteilhafterweise leicht erkennen, wie gut die Automatisierungsfunktion ausgeführt wird. Es wird ihm insbesondere erleichtert, seine Aufmerksamkeit besonders auf die Fahraufgaben zu richten, deren Überwachung derzeit die höchste Priorität hat.

Die Automatisierungsfunktion dient dazu, zumindest eine Fahrfunktion autonom zu übernehmen. Dabei handelt es sich insbesondere um eine Fahrfunktion zur Steuerung der Bewegung des Fahrzeugs, etwa in Quer- oder Längsrichtung. Beispielsweise kann automatisch eine bestimmte Fahrspur gehalten oder ein Verlassen einer Fahrbahn verhindert werden.

Beim Aktivieren der Automatisierungsfunktion wird insbesondere ein Automatisierungsgrad eingestellt. Dies kann beispielsweise anhand von SAE-Levels erfolgen (*Society of Automotive Engineers*), die verschiedene Grade der Automatisierung von 0 (keine Automatisierung), 1 (Unterstützung beim Fahren), 2 (teilweise Automatisierung) und 3 (Automatisierung unter bestimmten Bedingungen) erreichen. Ein bestimmter Automatisierungsgrad wird dann eingestellt, wenn ausreichende Daten in ausreichender Qualität zur Durchführung einer solchen Fahrfunktion zur Verfügung stehen.

Das Qualitätsmaß, welches in Abhängigkeit von den erfassten Umfelddaten bestimmt wird, gibt an, mit welcher Qualität, insbesondere wie zuverlässig und sicher, die aktivierte Automatisierungsfunktion ausgeführt werden kann. Das heißt, obwohl die Qualität der erfassten Umfelddaten an sich bei der Bestimmung des Qualitätsmaßes berücksichtigt werden kann, bezieht sich das Qualitätsmaß an sich auf die Funktionsweise und Funktionsfähigkeit der Automatisierungsfunktion. Bedingungen, die bei der Bestimmung des Qualitätsmaßes überprüft werden, können beispielsweise sein, ob bestimmte Orientierungspunkte im Straßenverlauf erfasst und ausgewertet werden können, beispielsweise ein Straßenrand, eine Straßenmarkierung, eine Positionsmarke oder ein Verkehrsschild.

Bei dem Verfahren kann anhand des Qualitätsmaßes eine Qualitätsstufe bestimmt werden. Hierbei wird dem bestimmten Qualitätsmaß eine von mehreren Stufen einer Skala zugeordnet. Insbesondere kann das Qualitätsmaß eine komplexere Struktur aufweisen, die unterschiedliche Aspekte der Qualität der Automatisierungsfunktion betreffen, etwa unterschiedliche Teilfunktionalitäten. Beispielsweise kann eine lineare Abbildung des Qualitätsmaßes mit einer anschließenden Diskretisierung erfolgen, um einen kontinuierlich gebildeten Wert des Qualitätsmaßes auf eine Qualitätsstufe abzubilden. Durch die Bestimmung der Qualitätsstufe kann die Komplexität dieser Informationen verringert werden, so dass eine einfach und schnell verständliche und erfassbare Qualitätsstufe auf einer Skala von beispielsweise 0 bis 4 ausgegeben werden kann.

Die Ausgabe kann ferner einen Automatisierungsindikator umfassen, wobei der Automatisierungsindikator die aktivierte Automatisierungsfunktion angibt. Der Nutzer kann dadurch vorteilhafterweise schnell erkennen, welche Automatisierungsfunktion aktiviert ist und welche Fahrfunktionen somit durch das System automatisch gesteuert werden. Bei dem Verfahren kann vorgesehen sein, dass die Automatisierungsfunktion automatisch aktiviert wird. Es kann ferner vorgesehen sein, dass die Aktivierung manuell erfolgt oder dass eine automatische Aktivierung manuell bestätigt werden muss.

Bei einer weiteren Ausbildung werden die Umfelddaten mittels Umfeldsensoren des Fahrzeugs erfasst. Erfindungsgemäß werden die Umfelddaten über eine datentechnische Verbindung mit einer fahrzeugexternen Datenquelle empfangen. Dadurch können vorteilhafterweise unterschiedlichste Arten von Umfelddaten erfasst und zur Verfügung gestellt werden.

Es können prinzipiell alle an sich bekannten Umfeldsensoren verwendet werden. Insbesondere sind optische, Infrarot-, Radar-, Lidar- oder Ultraschallsensoren vorgesehen. Ferner können an sich bekannte Verfahren zur Aufbereitung erfasster Umfelddaten in einem ersten Schritt verwendet werden, beispielsweise zur Extraktion relevanter Merkmaler innerhalb des erfassten Umfelds. Solche Merkmale können insbesondere Markierungen oder Zeichen zur Verkehrsregelung und zur Markierung von Verkehrswegen darstellen.

Durch die Erfassung von Umfelddaten über eine datentechnische Verbindung können beispielsweise Datenquellen über ein Netzwerk verwendet werden, etwa ein externer Server oder ein Netzwerk nach Art einer sogenannten Cloud. Alternativ oder zusätzlich kann eine Car-to-Car- oder eine Car-to-Infrastructure-Kommunikation verwendet werden, um Umfelddaten von anderen Fahrzeugen oder Einrichtungen einer Verkehrsinfrastruktur zu empfangen. Hier können unterschiedliche Merkmale über einen Verkehrsweg sowie Verkehrsregelungen hinterlegt sein, insbesondere in Verbindung mit hochgenauen Karten, die Informationen über fahrtrelevante Merkmale für bestimmte Positionen entlang eines Verkehrsweges oder einer geografischen Struktur umfassen.

Bei einer Weiterbildung des Verfahrens betreffen die Umfelddaten einen Fahrstreifen, eine Fahrbahnmarkierung, einen Fahrbahnrand, ein Verkehrsschild und/oder ein weiteres Fahrzeug in der Umgebung des Fahrzeugs. Dadurch werden vorteilhafterweise solche Umfelddaten erfasst und bereitgestellt, die zur Steuerung der Bewegung des Fahrzeugs von besonderer Relevanz sind.

Die Umfelddaten können des Weiteren prinzipiell jegliche andere Arten von Informationen umfassen, die das verkehrsrelevante Umfeld des Fahrzeugs betreffen. Beispielsweise können die Umfelddaten weitere Fahrzeuge betreffen, die dem eigenen Fahrzeug voraus oder hinter ihm fahren; zudem können auf benachbarten Fahrspuren lokalisierte Fahrzeuge relevant sein, etwa für einen Spurwechsel oder ein Überholmanöver, wobei sowohl in der gleichen Fahrtrichtung fahrende als auch entgegenkommende Fahrzeuge relevant sein können. Ferner können die Umfelddaten andere Verkehrsteilnehmer betreffen, insbesondere Radfahrer oder Fußgänger.

Insbesondere können Daten über klimatische Verhältnisse, Sonderereignisse wie etwa Baustellen, den umgebenden Verkehr, Sonderziele in der Umgebung des Fahrzeugs oder einer geplanten Route (Points of Interest, POI) oder weitere Informationen von den Umfelddaten umfasst sein. Die Erfassung der Umfelddaten kann in Abhängigkeit davon erfolgen, welche Automatisierungsfunktion aktiviert ist oder aktiviert werden soll. Die von den Umfelddaten umfassten Informationen können dann daran angepasst sein, welche Daten zum sicheren Betrieb der jeweiligen Automatisierungsfunktion notwendig sind.

Ferner kann vorgesehen sein, dass die Umfelddaten "Schwarmdaten" oder eine "Schwarmtrajektorie" umfassen, die insbesondere von einem externen Dienst, etwa einem Server oder einen Cloud-Service, empfangen werden. Als "Schwarmdaten" werden dabei Fahrzeugdaten von weiteren Fahrzeugen bezeichnet, die vorher die gleiche Position bereits befahren haben und ihre Daten (etwa Geschwindigkeit, Position relativ zur Fahrbahn oder Fahrspur, Versatz innerhalb einer Fahrspur) an eine zentrale Einheit, etwa den externen Dienst, übertragen haben. Als "Schwarmtrajektorie" wird ein Bewegungspfad bezeichnet, der basierend auf den Daten weiterer Fahrzeuge bestimmt wird, welche die Strecke und insbesondere die gleiche Fahrspur bereits zuvor befahren haben. Insbesondere umfasst die Schwarmtrajektorie auch Informationen über die Geschwindigkeit, mit der das Befahren erfolgte.

Bei der Erzeugung und/oder Auswertung der Schwarmtrajektorie wird insbesondere der örtliche Verlauf und/oder die Geschwindigkeit des Befahrens berücksichtigt. Die Bestimmung erfolgt etwa anhand der aktuellen Position des Fahrzeugs, die insbesondere mit einer solchen Genauigkeit bestimmt wird, dass die befahrene Fahrspur oder eine Position innerhalb der befahrenen Fahrspur bestimmt wird. Beispielsweise kann die Position dazu mittels Daten einer Kamera und anhand von Landmarken bestimmt werden. Auf diese Weise werden besonders relevante Umfelddaten bereitgestellt. Bei der Ausführung der Automatisierungsfunktion wird insbesondere berücksichtigt, wo die weiteren Fahrzeuge die Strecke befahren haben, insbesondere für eine automatische Querregelung, und/oder wie schnell sie die Strecke befahren haben, insbesondere für eine automatische Längsregelung. Dabei kann bei der Auswertung der Schwarmdaten und bei der Bestimmung der Schwarmtrajektorie bestimmt werden, wo und auf welche Weise die Mehrzahl der weiteren Fahrzeuge die Fahrspur gefahren sind. Ausgehend von der aktuellen Position des Fahrzeugs wird somit über einen externen Dienst, etwa einen Cloud-Service, ein Pfad erhalten mit Informationen darüber, mit welchem örtlichen Verlauf und mit welcher Geschwindigkeit andere Fahrzeuge auf der Fahrspur gefahren sind.

Bei einer Ausbildung gibt das Qualitätsmaß eine Zuverlässigkeit der aktivierten Automatisierungsfunktion an. Insbesondere gibt auch die Qualitätsstufe, die anhand des Qualitätsmaßes bestimmt wird, eine solche Zuverlässigkeit an. Dadurch kann der Fahrer vorteilhafterweise schnell und sicher erfassen, mit welcher Zuverlässigkeit die aktivierte Automatisierungsfunktion betrieben wird und in welchen Bereichen seine erhöhte Aufmerksamkeit zur zusätzlichen Überwachung der Fahrt gefordert ist.

Die Zuverlässigkeit der Automatisierungsfunktion kann auf an sich bekannte Weise bestimmt werden, beispielsweise anhand fester Regeln, die Bedingungen definieren, unter denen von einer bestimmten Zuverlässigkeit ausgegangen wird. Beispielsweise kann von einer verringerten Zuverlässigkeit ausgegangen werden, wenn bestimmte Arten von Informationen nicht oder in nicht ausreichender Qualität erfasst werden oder von den Umfelddaten nicht umfasst sind. Beispielsweise kann ein Spurhalteassistent mit verringerter Zuverlässigkeit betrieben werden, wenn keine Fahrbahnmarkierungen erfasst werden. Umgekehrt kann eine erhöhte Zuverlässigkeit vorgesehen sein, wenn ein weiteres Fahrzeug in der Umgebung des eigenen Fahrzeugs erfasst wird, etwa ein vorausfahrendes oder ein auf einer benachbarten Fahrspur befindliches Fahrzeug.

Auf die Zuverlässigkeit der aktivierten Automatisierungsfunktion kann sich auch die Qualität der erfassten Umfelddaten auswirken. Beispielsweise kann die Automatisierungsfunktion mit maximaler Zuverlässigkeit dann funktionieren, wenn die Umfelddaten mit optimaler Qualität erfasst werden, beispielsweise wenn die erfassten Daten eine besonders geringe Standardabweichung aufweisen. Die Datenqualität der Umfelddaten kann dabei auf an sich bekannte Weise bestimmt und bei der Bestimmung des Qualitätsmaßes berücksichtigt werden.

Das Qualitätsmaß kann in Abhängigkeit von zumindest einem der folgenden Parameter gebildet werden:
Anzahl oder Typ von aktivierten Umfeldsensoren des Fahrzeugs, Detektionsgenauigkeit eines Umfeldsensors des Fahrzeugs, statistische oder systematische Fehler bei der Erfassung der Umfelddaten und/oder Empfang von Umfelddaten über eine datentechnische Verbindung. Insbesondere kann vorgesehen sein, dass in einem ersten Schritt zur Verarbeitung der erfassten Umfelddaten die Qualität der Daten an sich bewertet wird. Dadurch können vorteilhafterweise unterschiedliche Aspekte bei der Bewertung der Umfelddaten und ihres Einflusses auf das Qualitätsmaß berücksichtigt werden.

Beispielsweise kann das Qualitätsmaß bestimmt werden, indem die Verfügbarkeit bestimmter Sensoren oder Systemen, die für die Automatisierungsfunktion relevant sind, als Bedingung für ein bestimmtes Qualitätsmaß definiert wird. Je nach der Verfügbarkeit der relevanten Sensoren oder System kann das Qualitätsmaß höher oder niedriger bestimmt werden. Zum Beispiel kann das Qualitätsmaß anhand der Anzahl der relevanten Sensoren und Systeme bestimmt werden, die verfügbar sind. Ferner kann vorgesehen sein, dass ein bestimmtes Qualitätsmaß nur beim Vorhandensein eines bestimmten Sensors oder Systems erreichbar ist.

Ferner kann das Qualitätsmaß anhand einer Kennzahl bestimmt werden, die in Abhängigkeit von der jeweiligen Güte der jeweiligen Sensorinformationen bestimmt wird. Diese Güte kann auf an sich bekannte Weise bestimmt und quantifiziert werden, etwa für die Qualität einer Erkennung einer rechten oder linken Fahrspur, die Qualität von Navigationsdaten oder Kartendaten, die Qualität von Informationen, die von einem Cloud-Service empfangen werden, oder für weitere Daten und Datenquellen. Bei der Bestimmung der Kennzahl können dabei verschiedene Einzelinformationen gewichtet werden, wobei beispielsweise die Relevanz der Information für die aktivierte Assistenzfunktion berücksichtigt wird.

Zum Betrieb der Automatisierungsfunktion werden insbesondere Sensordaten unterschiedlicher Quellen genutzt (etwa Radar, Lidar, optische Kameras, Daten eines Navigationssystems, Onlinedaten). Indem bei dem Verfahren das Qualitätsmaß für die Automatisierungsfunktion bestimmt und als Qualitätsstufe ausgegeben wird, kann der Fahrer auch erkennen, ob und in welcher Weise die zur Verfügung stehenden Datenquellen zum optimalen Betrieb der Automatisierungsfunktion ausreichen. Insbesondere können dem Fahrer Vorteile der Verwendung bestimmter Datenquellen vermittelt werden, beispielsweise wenn die Verbindung mit fahrzeugexternen Datenquellen, etwa einem Server, zur Verbesserung der Umfelddaten und damit auch der Funktionsweise der Automatisierungsfunktion beiträgt.

Erfindungsgemäß umfasst, wenn Umfelddaten mittels einer datentechnischen Verbindung empfangen werden, die grafische Ausgabe ferner ein Datenquellensymbol. Dies kann beispielsweise ein Wolkensymbol sein, um etwa die Herkunft von Umfelddaten aus einem Cloud-System zu symbolisieren. Der Nutzer kann dadurch vorteilhafterweise leicht erkennen, wenn eine datentechnische Verbindung zur Umfassung der Umfelddaten benutzt wird.

Bei einer Weiterbildung des Verfahrens umfasst das Qualitätsanzeigeelement ein Balkendiagramm. Es kann ferner auf eine andere an sich bekannte Weise ausgebildet sein, beispielsweise mittels eines Tortendiagramms, eines teilweise oder vollständig geschlossenen Ringelements, oder eines Keils mit variabler Dicke. Der Nutzer kann dadurch intuitiv auf einen Blick erkennen, wie die angezeigte Qualitätsstufe ausgebildet ist.

Bei einer Ausbildung wird durch die Automatisierungsfunktion eine zumindest teilweise autonome Querführung und/oder Längsführung des Fahrzeugs ausgeführt. Die Automatisierungsfunktion wird dadurch vorteilhafterweise zur Steuerung besonders relevanter Fahrfunktionen genutzt.

Insbesondere umfassen Fahrfunktionen zur Querführung des Fahrzeugs Maßnahmen betreffend Richtungsänderungen, insbesondere einen Lenkwinkel, des Fahrzeugs. Fahrfunktionen zur Längsführung betreffen insbesondere eine Beschleunigung oder ein Abbremsen des Fahrzeugs. Quer- und Längsführung können ferner in Kombination miteinander gesteuert werden und aufeinander abgestimmt sein.

Alternativ oder zusätzlich kann die Automatisierungsfunktion weitere Fahrfunktionen betreffen, beispielsweise eine Steuerung des Fahrwerks des Fahrzeugs, Lichtsignale oder eine Führung des Fahrzeugs entlang einer Route.

Bei einer Weiterbildung umfasst die Ausgabe eine schematische Darstellung einer Fahrbahn, wobei die schematische Darstellung anhand der Umfelddaten erzeugt wird und ein grafisches Element umfasst, das in Abhängigkeit von automatischen Steuerungseingriffen der Automatisierungsfunktion in die Quer- und/oder Längsführung des Fahrzeugs erzeugt wird. Diese schematische Darstellung kann insbesondere unterhalb der weiteren Elemente der Anzeige gemäß dem Verfahren angeordnet sein. Dadurch können vorteilhafterweise relevante Informationen zur Quer- und Längsführung des Fahrzeugs auf schematische Weise angezeigt werden.

Insbesondere werden anhand der schematischen Darstellung der Fahrbahn und ihrer grafischen Elemente Informationen zur Ausführung der Automatisierungsfunktion ausgegeben. Beispielsweise kann angezeigt werden, ob und in welcher Weise eine Fahrbahnmarkierung oder ein weiteres Fahrzeug in der Umgebung erfasst wurde. Ferner kann die Tätigkeit der Automatisierungsfunktion, etwa eines Spurhalteassistenten, ausgegeben werden, etwa mittels einer angezeigten Rückmeldung, wenn das System mittels der Automatisierungsfunktion in die Steuerung des Fahrzeugs eingreift und den Lenkwinkel verändert.

Bei einer Weiterbildung wird ferner eine akustische oder haptische Ausgabe erzeugt. Die Ausgabe ist dadurch vorteilhafterweise mittels mehrerer Sinne besonders schnell für den Fahrer erfassbar. Eine akustische oder haptische Ausgabe kann auf an sich bekannte Weise erfolgen.

Es kann insbesondere vorgesehen sein, dass eine weitere grafische, akustische und/oder haptische Ausgabe erzeugt wird, wenn eine Änderung des Qualitätsmaßes, insbesondere eine Verschlechterung, erfasst wird. Dies ist insbesondere dann von Bedeutung, wenn eine sicherheitsrelevante Automatisierungsfunktion von der sich verändernden, insbesondere der sich verschlechternden, Qualität abhängen. Beispielsweise kann auf diese Weise der Fahrer darauf hingewiesen werden, dass er die Arbeit der Automatisierungsfunktion mit höherer Aufmerksamkeit beobachten muss, um gegebenenfalls schnell und sicher eingreifen zu können.

Das erfindungsgemäße System der eingangs genannten Art umfasst eine Erfassungseinheit zum Erfassen von Umfelddaten sowie eine Auswertungseinheit, die dazu eingerichtet ist, in Abhängigkeit von den erfassten Umfelddaten die Automatisierungsfunktion zu aktivieren und ein Qualitätsmaß zu bestimmen. Das System umfasst ferner eine Steuereinheit, die dazu eingerichtet ist, eine grafische Ausgabe zu erzeugen und mittels einer Anzeigeeinheit auszugeben. Dabei umfasst die Ausgabe ein Qualitätsanzeigeelement, wobei das Qualitätsanzeigeelement in Abhängigkeit von dem Qualitätsmaß gebildet wird.

Bei dem erfindungsgemäßen System umfasst die Erfassungseinheit eine Schnittstelle zum Empfangen von Umfelddaten über eine datentechnische Verbindung mit einer fahrzeugexternen Datenquelle, wobei, wenn Umfelddaten mittels der datentechnischen Verbindung empfangen werden, die grafische Ausgabe ferner ein Datenquellensymbol umfasst.

Das erfindungsgemäße System ist insbesondere ausgebildet, das vorstehend beschriebene erfindungsgemäße Verfahren zu implementieren. Das System weist somit dieselben Vorteile auf wie das erfindungsgemäße Verfahren.

Die Anzeigeeinheit ist auf an sich bekannte Weise ausgebildet. Sie kann beispielsweise ein Display umfassen, wie es üblicherweise an der Mittelkonsole von Fahrzeugen angeordnet ist. Alternativ oder zusätzlich kann die Anzeigeeinheit ein Head-up-Display oder eine Anzeige im Kombiinstrument des Fahrzeugs umfassen. Sie kann ferner eine Anzeige mittels eines fahrzeugexternen Anzeigeelements umfassen, beispielsweise mittels eines datentechnisch mit dem System verbundenen Mobiltelefons.

Die Erfassungseinheit kann Umfeldsensoren des Fahrzeugs umfassen.

Dadurch können vorteilhafterweise Quellen für Umfelddaten verschiedener Art verwendet werden.

Die Anzeige kann ferner einen Automatisierungsindikator umfassen, welcher die aktivierte Automatisierungsfunktion angibt. Dadurch wird vorteilhafterweise deutlich gezeigt, welche aktivierte Automatisierungsfunktion derzeit aktiviert ist. Alternativ oder zusätzlich kann die Anzeige ein Datenquellensymbol umfassen, beispielsweise ein Wolkensymbol, insbesondere wenn Umfelddaten mittels einer datentechnischen Verbindung erfasst werden.

Das System kann ferner eine Eingabeeinheit umfassen, durch die eine Eingabe eines Nutzers erfassbar ist. Beispielsweise kann mittels dieser Eingabe eine Automatisierungsfunktion ausgewählt und aktiviert beziehungsweise deaktiviert werden. Insbesondere kann in diesem Fall eine Eingabeaufforderung ausgegeben werden, durch die ein Nutzer beispielsweise aufgefordert wird, das Aktivieren oder Deaktivieren einer Automatisierungsfunktion zu bestätigen.

Die Eingabeeinheit kann dabei auf an sich bekannte Weise ausgebildet sein, insbesondere mittels eines Touchscreens, durch den die Eingabeeinheit mit der Anzeigeeinheit kombinierbar ist. Alternativ oder zusätzlich kann ein anderes an sich bekanntes Eingabemittel verwendet werden, beispielsweise zur Eingabe mittels einer durch die Anzeigeeinheit ausgegebenen grafischen Oberfläche.

Die Erfindung wird nun anhand von Ausführungsbeispielen mit Bezug zu den Zeichnungen erläutert.
- Figur 1: zeigt ein Fahrzeug mit einem Ausführungsbeispiel des erfindungsgemäßen Systems,
- Figur 2: zeigt ein Ausführungsbeispiel der bei dem erfindungsgemäßen Verfahren erzeugten Ausgabe und
- Figuren 3A bis 3E: zeigen weitere Ausführungsbeispiele der bei dem erfindungsgemäßen Verfahren erzeugten Ausgabe.

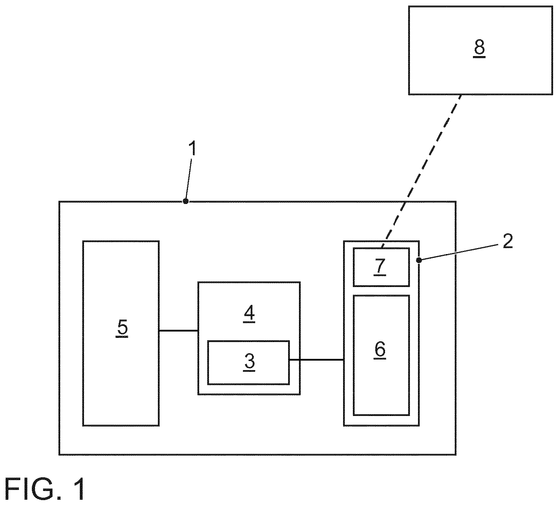

Mit Bezug zu Figur 1 wird ein erstes Ausführungsbeispiel des erfindungsgemäßen Systems erläutert.

Ein Fahrzeug 1 umfasst eine Erfassungseinheit 2, die wiederum Umfeldsensoren 6 sowie eine Schnittstelle 7 umfasst. Durch die Schnittstelle 7 ist eine datentechnische Verbindung zu einem externen Server 8 herstellbar, im dargestellten Beispiel ein Cloud-Service 8. Die Erfassungseinheit 2 ist mit einer Auswertungseinheit 3 gekoppelt, welche von einer Steuereinheit 4 umfasst ist. Ferner ist die Steuereinheit 4 mit einer Anzeigeeinheit 5 gekoppelt.

Mit Bezug zu den Figuren 1, 2 und 3 wird ein Ausführungsbeispiel des erfindungsgemäßen Verfahrens erläutert. Dabei wird von dem oben mit Bezug zu Figur 1 erläuterten Ausführungsbeispiel des erfindungsgemäßen Systems ausgegangen.

Mittels der Erfassungseinheit 2 des Systems werden Umfelddaten erfasst. Hierzu werden auf an sich bekannte Weise die Umfeldsensoren 6 des Fahrzeugs 1 verwendet, die bei dem Ausführungsbeispiel Radar-, Lidar- und Ultraschallsensoren umfassen können. Ferner kann eine optische Kamera oder ein anderer Sensor umfasst sein. Ergänzend dazu werden bei dem Ausführungsbeispiel Umfelddaten mittels einer datentechnischen Verbindung der Schnittstelle 7 zu dem Cloud-Service 8 empfangen.

In einem weiteren Ausführungsbeispiel kann vorgesehen sein, dass über die Schnittstelle 7 auch Daten des Fahrzeugs 1 gesendet werden, etwa Umfelddaten, Daten der Umfeldsensoren 6 oder weitere Daten des Fahrzeugs 1, insbesondere auch mittels einer Eingabe eines Nutzers erfasste Daten. Die Daten können dann beispielsweise von einem externen Server oder dem Cloud-Service 8 gespeichert und/oder verarbeitet werden.

Die erfassten Umfelddaten umfassen insbesondere solche Daten, anhand derer verkehrsrelevante Merkmale des Umfeldes des Fahrzeugs 1 erkannt werden können. Hierzu zählen beispielsweise Lage, Verlauf und Begrenzung eines Fahrstreifens oder einer Fahrbahn, eine Fahrbahnmarkierung, ein Fahrbahnrand, ein Verkehrsschild und/oder ein weiteres Fahrzeug in der Umgebung. Dabei erfolgt die Erfassung der Umfelddaten insbesondere so, dass sie besonders verkehrsrelevante oder für die Fahrt des Fahrzeugs 1 relevante Daten umfassen. Beispielsweise kann die Auswahl der zur Erfassung verwendeten Umfeldsensoren 6 so erfolgen, dass besonders relevante Daten erfasst und insbesondere die Erfassung unnötig vieler Daten vermieden wird. Bei dem Ausführungsbeispiel ist vorgesehen, dass durch eine Vorverarbeitung durch die Erfassungseinheit 2 verkehrsrelevante Informationen bereits extrahiert werden, sodass die an die Auswertungseinheit 3 übertragenen Umfelddaten relevante Informationen in effizient zu verarbeitender Form umfassen. Die Auswertungseinheit 3 empfängt die Umfelddaten und aktiviert zumindest eine Automatisierungsfunktion. Dabei wird über die Aktivierung einer bestimmten Funktion in Abhängigkeit davon entschieden, welche Umfelddaten vorliegen und in welcher Qualität diese Daten erfasst werden. Ferner wird ein Qualitätsmaß bestimmt, das angibt, wie zuverlässig die Automatisierungsfunktion ausgeführt werden kann.

Die Auswertungseinheit 3 bestimmt das Qualitätsmaß so, dass dieses nicht nur Auskunft über die Qualität der erfassten Umfelddaten an sich gibt, sondern es wird bestimmt, welche Umfelddaten in welcher Qualität vorliegen und wie sich dies auf die Funktionsweise der Automatisierungsfunktion auswirkt. Beispielsweise kann bestimmt werden, mittels welcher Sensoren und/oder Datenquellen die Umfelddaten erfasst wurden, und bestimmten Sensoren und/oder Kombinationen davon kann das Qualitätsmaß zugeordnet werden. Je nach dem Qualitätsmaß ist eine mehr oder weniger aufmerksame Überwachung der Funktionsweise der Automatisierungsfunktion durch den Fahrer des Fahrzeugs 1 erforderlich, um einen sicheren Betrieb des Fahrzeugs sicherzustellen.

Anhand des Qualitätsmaßes wird ferner eine Qualitätsstufe bestimmt. Während das Qualitätsmaß bei dem Ausführungsbeispiel so bestimmt wird, dass es für unterschiedliche Automatisierungsfunktionen beziehungsweise für verschiedene Aspekte automatisierter Funktionen des Fahrzeugs 1 Informationen umfasst, stellt die Qualitätsstufe eine einfachere Bewertung auf einer mehrstufigen Skala dar. Diese Skala umfasst bei dem Ausführungsbeispiel die Stufen 0 bis 4, bei weiteren Ausführungsbeispielen können allerdings auch Stufen 0 bis 10, 1 bis 10 oder andere gestufte Skalen verwendet werden. Bei einem weiteren Ausführungsbeispiel kann die Skala kontinuierlich gebildet sein, beispielsweise von 0 bis 1, 0 bis 10 oder auf ähnliche Weise.

Bei dem Ausführungsbeispiel wird zur Bestimmung des Qualitätsmaßes bestimmt, welche für die Automatisierungsfunktion relevanten Umfeldsensoren 6 verfügbar sind. Je nach der Anzahl verfügbarer Umfeldsensoren 6 ist das Qualitätsmaß höher oder niedriger. Insbesondere ist dabei das Qualitätsmaß umso höher, je mehr Umfeldsensoren 6 verfügbar sind. Beispielsweise ist das Qualitätsmaß umso höher, je mehr verschiedene Informationen erfasst werden können, etwa die Erkennung einer Spurmarkierung, ein Vorderfahrzeug oder der Zugang zu Daten des Cloud-Service 8.

Insbesondere kann auch vorgesehen sein, dass ein bestimmtes Qualitätsmaß nur beim Vorhandensein eines bestimmten Umfeldsensors 6 erreicht werden kann. Umgekehrt kann vorgesehen sein, dass ein bestimmtes Qualitätsmaß unabhängig von anderen Sensoren und Systemen immer dann automatisch erreicht wird, wenn ein bestimmter Umfeldsensor 6 verfügbar ist.

Durch die Steuereinheit 4 wird eine grafische Ausgabe 10 erzeugt und an die Anzeigeeinheit 5 übertragen, wo sie ausgegeben wird. Die Anzeigeeinheit 5 umfasst bei dem Ausführungsbeispiel ein an sich bekanntes Display. Bei einem weiteren Ausführungsbeispiel ist auf dem Display eine berührungsempfindliche Folie angeordnet, das heißt, die Anzeigeeinheit 5 ist als Touchscreen ausgebildet und kann zur Erfassung von Nutzereingaben verwendet werden.

Bei weiteren Ausführungsbeispielen kann die Anzeigeeinheit 5 alternativ oder zusätzlich einen Bereich des Kombiinstruments des Fahrzeugs 1 oder ein Head-up-Display umfassen. Es kann ferner eine fahrzeugexterne Anzeigeeinheit umfassen, beispielsweise ein Mobiltelefon mit einem Display.

Die grafische Ausgabe 10 umfasst ein Qualitätsanzeigeelement 11, das bei dem Ausführungsbeispiel als Balkendiagramm ausgeführt ist. In weiteren Ausführungsbeispielen sind andere Darstellungsformen möglich, beispielsweise ein Tortendiagramm, ein teilweise oder ganz geschlossener Ring oder andere Formen.

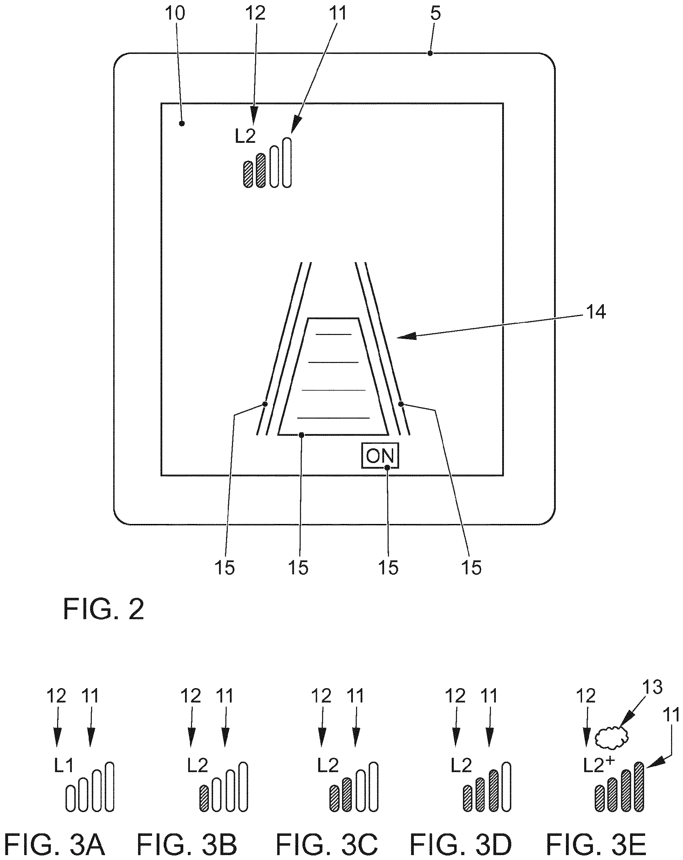

Bei dem Ausführungsbeispiel umfasst das Qualitätsanzeigeelement 11 vier Balken, die aufrecht nebeneinander angeordnet sind, wobei ihre Länge von links nach rechts wächst. Die Balken können als Umrisse oder als gefüllte Strukturen dargestellt werden; es können jedoch zwei unterschiedliche Darstellungsformen alternativ oder zusätzlich auf andere Weise unterschieden werden, beispielsweise mittels einer unterschiedlichen Helligkeit, Farbe oder eines dynamischen Effekts, etwa durch Blinken. Auf diese Weise können bei dem Ausführungsbeispiel ganzzahlige Werte von 0 bis 4 ausgegeben werden, wobei dem Wert "0" vier nur durch Umrisse dargestellte Balken entsprechen, während bei dem Wert "4" alle vier Balken ausgefüllt dargestellt werden. Zwischenwerte werden dementsprechend mit einer Anzahl ausgefüllter Balken dargestellt, während die restlichen Balken nur durch Umrisse dargestellt werden. Diese Darstellungsform ist in den Figuren 3A bis 3E für die Werte 0, 1, 2, 3 und 4 dargestellt.

Die Ausgabe 10 umfasst ferner einen Automatisierungsindikator 12, der Auskunft über die aktivierte Automatisierungsfunktion gibt. Bei den in den Figuren 3A bis 3E dargestellten Fällen sind die Automatisierungsfunktionen als L1, L2 beziehungsweise L2+ angegeben. In anderen Ausführungsbeispielen können andere Bezeichnungen, Symbole oder Mischungen davon verwendet werden.

Bei dem Ausführungsbeispiel entsprechen die unterschiedlichen Automatisierungsfunktionen verschiedenen Graden der Automatisierung. Bei dem in Figur 3A dargestellten Fall steht die Angabe "L1" für einen minimalen Grad der Automatisierung. Bei dem in den Figuren 3B, 3C und 3D angegebenen Fall steht die Angabe "L2" für eine teilweise autonome Steuerung des Fahrzeugs in Querrichtung, insbesondere durch einen Spurhalteassistenten. Durch diesen werden die Begrenzungen des aktuell benutzten Fahrstreifens erkannt und das Fahrzeug wird so gesteuert, dass es diese Fahrspur nicht verlässt. Bei dem in Figur 3E dargestellten Fall steht die Angabe "L2+" für eine Durchführung der automatischen Querführung des Fahrzeugs 1 durch den Spurhalteassistenten, wobei zusätzlich zu den fahrzeugeigenen Sensoren 6 auch von dem externen Server 8 empfangene Umfelddaten berücksichtigt werden. Um die Verwendung dieser Datenquelle anzuzeigen, wird ferner das Datenquellensymbol 13 angezeigt. Dieses ist bei dem Ausführungsbeispiel als schematisch dargestellte Wolke ausgeführt, welche die Verwendung eines Cloud-Services 8 symbolisiert. Das Datenquellensymbol 13 kann bei weiteren Ausführungsbeispielen anders ausgebildet sein. Ferner kann ein anderes Symbol ausgegeben werden, wenn keine datentechnische Verbindung besteht oder über die Verbindung keine Umfelddaten empfangen werden.

In den Figuren 3A bis 3E ist das Qualitätsanzeigeelement 11 in den Zuständen dargestellt, die es für die Qualitätsstufen 0 bis 4 einnimmt. Insbesondere können die Qualitätsstufen bei aktivierter Querführung des Fahrzeugs 1 von 1 (Figur 3B) bis 4 (Figur 3E) variieren. Da bei dem Ausführungsbeispiel die Qualitätsstufen eine Zuverlässigkeit der aktivierten Automatisierungsfunktion angeben, kann der Fahrer in den dargestellten Fällen erkennen, in welchem Maße er die Funktionsweise der automatischen Querführung überwachen muss und mit welcher Wahrscheinlichkeit damit zu rechnen ist, dass manuelle Eingriffe nötig werden. Dem Fahrer wird es dadurch ermöglicht, sich besonders auf diejenigen Fahraufgaben zu konzentrieren, bei denen keine oder lediglich eine weniger zuverlässige automatische Unterstützung verfügbar ist.

Bei dem Ausführungsbeispiel umfasst die grafische Ausgabe ferner eine schematische Darstellung 14, die den Zustand des aktivierten Spurhalteassistenten darstellt. Die schematische Darstellung 14 umfasst grafische Elemente 15, die bei dem in Figur 2 dargestellten Ausführungsbeispiel zwei eine Fahrspur begrenzende Fahrbahnmarkierungen umfassen. In diesem Fall hat das System zwei derartige Markierungen an den Rändern der vor dem Fahrzeug liegenden Straße erkannt. Dargestellt wird ferner eine Markierung des vor dem Fahrzeug liegenden Fahrbahnbereichs, durch die dem Fahrer angezeigt wird, dass dieser Bereich gefahrlos befahrbar ist und beispielsweise nicht von einer Kollision mit einem anderen Verkehrsteilnehmer auszugehen ist. Ferner wird bei dem hier dargestellten Beispiel durch die Anzeige "ON" dargestellt, dass der Spurhalteassistent als Automatisierungsfunktion aktiviert ist. Bei weiteren Ausführungsbeispielen beziehungsweise in anderen Fällen der Verwendung des Spurhalteassistenten kann die schematische Darstellung anders ausgebildet sein, beispielsweise mit nur einer erkannten Fahrspurmarkierung oder mit einer anderen Art von Fahrspurmarkierung, etwa weil lediglich ein nicht markierter Fahrbahnrand detektiert wurde oder weil unterschiedliche Markierungen, etwa durchgezogen oder durchbrochen, erfasst wurden. Ferner kann der Spurhalteassistent deaktiviert sein, wobei die Markierung "OFF" angezeigt werden kann. Dies kann beispielsweise bei dem in Figur 3A dargestellten Fall der zu geringen Zuverlässigkeit der Automatisierungsfunktion erfolgen.

Bei einem weiteren Ausführungsbeispiel kann ferner eine akustische oder haptische Ausgabe vorgesehen sein, die zusätzlich zu der grafischen Ausgabe ausgegeben wird. Insbesondere kann vorgesehen sein, dass eine solche zusätzliche Ausgabe erfolgt, wenn sich das Qualitätsmaß verändert, insbesondere wenn sich die Qualität verschlechtert. Beispielsweise können zusätzliche grafische, akustische und/oder haptische Ausgaben erzeugt werden, wenn erfasst wird, dass sich die Qualitätsstufe für die Ausführung einer Automatisierungsfunktion verschlechtert. Der Nutzer kann dadurch besonders deutlich darauf hingewiesen werden, dass eine sicherheitsrelevante Automatisierungsfunktion mit einer geringeren Zuverlässigkeit betrieben wird und entsprechend eine höhere Aufmerksamkeit bei der Überwachung der Automatisierungsfunktion aufzuwenden ist.

### Bezugszeichenliste

- 1: Fahrzeug
- 2: Erfassungseinheit
- 3: Auswertungseinheit
- 4: Steuereinheit
- 5: Anzeigeeinheit
- 6: Umfeldsensoren
- 7: Schnittstelle
- 8: Externer Server; Cloud-Service
- 10: Ausgabe
- 11: Qualitätsanzeigeelement
- 12: Automatisierungsindikator
- 13: Datenquellensymbol
- 14: Schematische Darstellung
- 15: Grafisches Element

## Patentansprüche

1. Verfahren zur Bereitstellung einer Automatisierungsfunktion für ein Fahrzeug (1), bei dem Umfelddaten erfasst werden;
in Abhängigkeit von den erfassten Umfelddaten die Automatisierungsfunktion aktiviert und ein Qualitätsmaß bestimmt wird; und
eine grafische Ausgabe (10) erzeugt und ausgegeben wird; wobei
die Ausgabe ein Qualitätsanzeigeelement (11) umfasst; wobei
das Qualitätsanzeigeelement (11) in Abhängigkeit von dem Qualitätsmaß gebildet wird,
**dadurch gekennzeichnet, dass**
die Umfelddaten über eine datentechnische Verbindung mit einer fahrzeugexternen Datenquelle empfangen werden; wobei,
wenn Umfelddaten mittels der datentechnischen Verbindung empfangen werden, die grafische Ausgabe ferner ein Datenquellensymbol (13) umfasst.

2. Verfahren gemäß einem der vorhergehenden Ansprüche,
**dadurch gekennzeichnet, dass**
die Umfelddaten einen Fahrstreifen, eine Fahrbahnmarkierung, einen Fahrbahnrand, ein Verkehrsschild und/oder ein weiteres Fahrzeug in der Umgebung des Fahrzeugs (1) betreffen.

3. Verfahren gemäß einem der vorhergehenden Ansprüche,
**dadurch gekennzeichnet, dass**
das Qualitätsmaß eine Zuverlässigkeit der aktivierten Automatisierungsfunktion angibt.

4. Verfahren gemäß einem der vorhergehenden Ansprüche,
**dadurch gekennzeichnet, dass**
das Qualitätsanzeigeelement (11) ein Balkendiagramm umfasst.

5. Verfahren gemäß einem der vorhergehenden Ansprüche,
**dadurch gekennzeichnet, dass**
durch die Automatisierungsfunktion eine zumindest teilweise autonome Querführung und/oder Längsführung des Fahrzeugs (1) ausgeführt wird.

6. Verfahren gemäß Anspruch 5,
**dadurch gekennzeichnet, dass**
die Ausgabe eine schematische Darstellung (14) einer Fahrbahn umfasst; wobei
die schematische Darstellung (14) anhand der Umfelddaten erzeugt wird und ein grafisches Element (15) umfasst, das in Abhängigkeit von automatischen Steuerungseingriffen der Automatisierungsfunktion in die Quer- und/oder Längsführung des Fahrzeugs erzeugt wird.

7. Verfahren gemäß einem der vorhergehenden Ansprüche,
**dadurch gekennzeichnet, dass**
ferner eine akustische oder haptische Ausgabe erzeugt wird.

8. System zur Bereitstellung einer Automatisierungsfunktion für ein Fahrzeug (1), umfassend
eine Erfassungseinheit (2) zum Erfassen von Umfelddaten;
eine Auswertungseinheit (3), die dazu eingerichtet ist, in Abhängigkeit von den erfassten Umfelddaten die Automatisierungsfunktion zu aktivieren und ein Qualitätsmaß zu bestimmen; und
eine Steuereinheit (4), die dazu eingerichtet ist, eine grafische Ausgabe (10) zu erzeugen und mittels einer Anzeigeeinheit (5) auszugeben; wobei
die Ausgabe (10) ein Qualitätsanzeigeelement (11) umfasst; wobei
das Qualitätsanzeigeelement (11) in Abhängigkeit von dem Qualitätsmaß gebildet wird,
**dadurch gekennzeichnet, dass**
die Erfassungseinheit (2) eine Schnittstelle (7) zum Empfangen von Umfelddaten über eine datentechnische Verbindung mit einer fahrzeugexternen Datenquelle umfasst; wobei,
wenn Umfelddaten mittels der datentechnischen Verbindung empfangen werden, die grafische Ausgabe ferner ein Datenquellensymbol (13) umfasst.

## Claims

1. Method for providing an automation function for a vehicle (1), wherein
environment data are detected;
depending on the detected environment data, the automation function is activated and a quality measure is determined; and
a graphical output (10) is generated and output;
wherein
the output comprises a quality display element (11); wherein
the quality display element (11) is formed depending on the quality measure,
**characterized in that**
the environment data are received via a data-technological connection to a vehicle-external data source; wherein,
if environment data are received by means of the data-technological connection, the graphical output furthermore comprises a data source symbol (13).

2. Method according to any of the preceding claims,
**characterized in that**
the environment data concern a lane, a roadway marking, a roadway edge, a traffic sign and/or a further vehicle in the surroundings of the vehicle (1) .

3. Method according to any of the preceding claims,
**characterized in that**
the quality measure indicates a reliability of the activated automation function.

4. Method according to any of the preceding claims,
**characterized in that**
the quality display element (11) comprises a bar chart.

5. Method according to any of the preceding claims,
**characterized in that**
at least partly autonomous transverse guidance and/or longitudinal guidance of the vehicle (1) are/is performed by the automation function.

6. Method according to Claim 5,
**characterized in that**
the output comprises a schematic representation (14) of a roadway; wherein
the schematic representation (14) is generated on the basis of the environment data and comprises a graphical element (15) generated depending on automatic control interventions in the transverse and/or longitudinal guidance of the vehicle by the automation function.

7. Method according to any of the preceding claims,
**characterized in that**
an acoustic or haptic output is furthermore generated.

8. System for providing an automation function for a vehicle (1), comprising
a detection unit (2) for detecting environment data;
an evaluation unit (3) configured, depending on the detected environment data, to activate the automation function and to determine a quality measure; and
a control unit (4) configured to generate a graphical output (10) and to output the latter by means of a display unit (5); wherein
the output (10) comprises a quality display element (11); wherein
the quality display element (11) is formed depending on the quality measure,
**characterized in that**
the detection unit (2) comprises an interface (7) for receiving environment data via a data-technological connection to a vehicle-external data source; wherein,
if environment data are received by means of the data-technological connection, the graphical output furthermore comprises a data source symbol (13).

## Revendications

1. Procédé de fourniture d'une fonction d'automatisation pour un véhicule (1), dans lequel
des données d'environnement sont acquises ;
en fonction des données d'environnement acquises, la fonction d'automatisation est activée et une mesure de qualité est déterminée ; et
une sortie graphique (10) est générée et délivrée ; dans lequel
la sortie comprend un élément d'indication de qualité (11) ; dans lequel
l'élément d'indication de qualité (11) est établi en fonction de la mesure de qualité,
**caractérisé en ce que**
les données d'environnement sont reçues par l'intermédiaire d'une liaison technique de données avec une source de données extérieure au véhicule ; dans lequel,
lorsque des données d'environnement sont reçues au moyen de la liaison technique de données, la sortie graphique comprend en outre un symbole de source de données (13).

2. Procédé selon l'une quelconque des revendications précédentes,
**caractérisé en ce que** les données d'environnement concernent une voie de circulation, un marquage au sol, un bord de voie de circulation, un panneau de signalisation et/ou un autre véhicule dans l'environnement du véhicule (1).

3. Procédé selon l'une quelconque des revendications précédentes,
**caractérisé en ce que** la mesure de qualité indique une fiabilité de la fonction d'automatisation activée.

4. Procédé selon l'une quelconque des revendications précédentes,
**caractérisé en ce que** l'élément d'indication de qualité (11) comprend un diagramme à barres.

5. Procédé selon l'une quelconque des revendications précédentes,
**caractérisé en ce qu'**un guidage transversal et/ou longitudinal au moins partiellement autonome du véhicule (1) est effectué par la fonction d'automatisation.

6. Procédé selon la revendication 5,
**caractérisé en ce que**
la sortie comprend une représentation schématique (14) d'une voie de circulation ; dans lequel
la représentation schématique (14) est générée à l'aide des données d'environnement et comprend un élément graphique (15) qui est généré en fonction d'interventions de commande automatiques de la fonction d'automatisation dans le guidage transversal et/ou longitudinal du véhicule.

7. Procédé selon l'une quelconque des revendications précédentes,
**caractérisé en ce qu'**une sortie acoustique ou haptique est en outre générée.

8. Système de fourniture d'une fonction d'automatisation pour un véhicule (1), comprenant
une unité d'acquisition (2) destinée à acquérir des données d'environnement ;
une unité d'évaluation (3) qui est conçue pour activer la fonction d'automatisation et déterminer une mesure de qualité en fonction des données d'environnement acquises ; et
une unité de commande (4) qui est conçue pour générer une sortie graphique (10) et la délivrer au moyen d'une unité d'affichage (5) ; dans lequel
la sortie (10) comprend un élément d'indication de qualité (11) ; dans lequel
l'élément d'indication de qualité (11) est établi en fonction de la mesure de qualité,
**caractérisée en ce que**
l'unité de détection (2) comprend une interface (7) destinée à recevoir des données d'environnement par l'intermédiaire d'une liaison technique de données avec une source de données extérieure au véhicule ; dans lequel,
lorsque des données d'environnement sont reçues au moyen de la liaison technique de données, la sortie graphique comprend en outre un symbole de source de données (13).
